# EUROPÄISCHE PATENTSCHRIFT

(11) **EP 2 977 638 B1**
(45) Veröffentlichungstag und Bekanntmachung des Hinweises auf die Patenterteilung: **31.05.2017**
(21) Anmeldenummer: 15173657.6
(22) Anmeldetag: 24.06.2015
(51) Int. Cl.: F16D 25/12, F16F 7/104, F16D 25/08

(54) **TILGER ZUR BESEITIGUNG DER REIBERREGTEN SCHWINGUNGEN IM AUSRÜCKSYSTEM**
DAMPER TO REMOVE FRICTION-INDUCED VIBRATIONS IN THE RELEASE SYSTEM
AMORTISSEUR DESTINE A ELIMINER LES OSCILLATIONS PRODUITES PAR FROTTEMENT DANS LE SYSTEME DE DEBRAYAGE

(30) Priorität: 22.07.2014 DE 102014214207
(43) Veröffentlichungstag der Anmeldung: 27.01.2016
(73) Patentinhaber: Schaeffler Technologies AG & Co. KG, 91074 Herzogenaurach (DE)
(72) Erfinder: Ryzhik, Boris, 76185 Karlsruhe (DE)

(56) Entgegenhaltungen:
- WO-A1-2014/034034
- DE-A1-102007 049 444
- SU-A1- 1 310 544

## Beschreibung

Die Erfindung betrifft eine Zylinderanordnung mit einem Tilger, zumindest umfassend einen Zylinder und einen darin angeordneten Kolben, wobei der Kolben mindestens ein Dichtelement zum Dichten der relativ zueinander verschiebbaren Bauteile Kolben und Zylinder aufweist; und ein hydraulisches oder pneumatisches Rücksystem für eine Reibkupplung, insbesondere für ein Kraftfahrzeug.

Im Stand der Technik sind verschiedene Dichtelemente bekannt, die zum Dichten in einem hydraulischen System geeignet sind. Dabei kann jedoch aufgrund der Federkraft der Kontaktlippe und dem Reibkontakt mit der korrespondierenden Dichtfläche ein sogenannter Stick-Slip-Effekt auftreten, das heißt die Kontaktlippe hebt aufgrund der Reibung und der Vorspannung ab und senkt sich wieder und erzeugt so ein hörbares Geräusch, zum Beispiel ein Rattern oder Quietschen. Dieser Effekt ist bei manchen Werkstoffen, wie zum Beispiel silikonbasierten Dichtungen, vermindert. Allerdings sind solche Werkstoffe nicht mit allen gängigen Medien, zum Beispiel Bremsflüssigkeiten, kompatibel. Dichtungen aus EPDM (Ethylen-Propylen-Dien-Kautschuk) zum Beispiel sind über ein großes Feld von Medien einsetzbar. Dieser Werkstoff neigt jedoch zum Quietschen aufgrund eines ausgeprägten Stick-Slip-Effekts. Die nachfolgende Erfindung ist mit jeglichem Dichtwerkstoff ausführbar. Dokument DE102007049444 offenbart z.B. eine Zylinderanordnung mit zusätzlichem Tilger.

Hiervon ausgehend liegt der vorliegenden Erfindung die Aufgabe zugrunde, die aus dem Stand der Technik bekannten Nachteile zumindest teilweise zu überwinden und die hörbaren Geräusche zu eliminieren oder zumindest zu dämpfen. Die Aufgabe wird durch die Merkmale des unabhängigen Patentanspruchs 1 gelöst. Vorteilhafte Weiterbildungen sind Gegenstand der abhängigen Patentansprüche.

Die Erfindung betrifft eine Zylinderanordnung mit einem Tilger, zumindest umfassend einen Zylinder und einen darin angeordneten Kolben, wobei der Kolben mindestens ein Dichtelement zum Dichten der relativ zueinander verschiebbaren Bauteile Kolben und Zylinder aufweist und zumindest eine Kontaktlippe mit einem Umfang umfasst, die dazu eingerichtet ist, im Einbau verschiebbar an einer korrespondierenden Dichtfläche des Zylinders umfänglich anzuliegen und somit eine Dichtwirkung einzustellen; wobei die Zylinderanordnung ohne Tilger ein Basissystem darstellt und durch die folgenden Parameter charakterisiert wird:
- m_{B} (Masse des Basissystems),
- c_{B} (Steifigkeit des Basissystems),
- d_{B} (Dämpfung des Basissystems), und
- ω_{B} (Eigenfrequenz des Basissystems), wobei ω_{B} = √(c_{B}/m_{B});
dadurch gekennzeichnet, dass der Tilger an dem Basissystem befestigt ist und folgende Parameter aufweist:
- m_{T} (Masse des Tilgers),
- c_{T} (Steifigkeit des Tilgers),
- d_{T} (Dämpfung des Tilgers) und
- ω_{T} (Eigenfrequenz des Tilgers), wobei ω_{T} = √(c_{T}/m_{T}); und
der Tilger folgende Bedingungen erfüllt:
- 0,6 * ω_{B} ≤ ω_{T} ≤ 0,9 * ω_{B} und
- 0,3 * 2 * √(c_{T} * m_{T}) ≤ d_{T} ≤ 0,9 * 2 * √(c_{T} * m_{T}),
wobei der Tilger die Dämpfung des Basissystems erhöht und eine Anregungsfrequenz des Basissystems dämpft.

Im Rahmen der vorliegenden Erfindung wurde herausgefunden, dass die Hauptursache für das Quietschen ein negativer Reibwertgradient (eine Senkung des Reibwertes zwischen Dichtelement und Dichtfläche bei Erhöhung der Geschwindigkeit des Kolbens) ist. Daher wird ein Tilger vorgeschlagen, der den Effekt des negativen Reibwertgradienten neutralisieren soll. Der Tilger soll insbesondere die Dämpfung des Basissystems erhöhen.

Im Rahmen der Erfindung wurde zudem herausgefunden, dass die Eigenfrequenz des Tilgers nicht mit der Eigenfrequenz des Basissystems übereinstimmen sollte, da die erzeugten Schwingungen des Basissystems sehr stark von der Geschwindigkeit des Kolbens abhängen.

Für die Berechnung der einzelnen Parameter werden die folgenden Einheiten verwendet:

| | |
|---|---|
| • m_{B} (Masse des Basissystems): | in [kg] |
| • c_{B} (Steifigkeit des Basissystems): | in [Newton/m] |
| • d_{B} (Dämpfung des Basissystems): | in [Newton*s/m] |
| • ω_{B} (Eigenfrequenz des Basissystems): | in [Hz] |
| • m_{T} (Masse des Tilgers): | in [kg] |
| • c_{T} (Steifigkeit des Tilgers): | [Newton/m] |
| • d_{T} (Dämpfung des Tilgers): | in [Newton*s/m] |
| • ω_{T} (Eigenfrequenz des Tilgers): | in [Hz] |

Insbesondere wird durch den Tilger die Dämpfung des Basissystems erhöht, also die Dämpfung des Basissystems plus Tilger als die Dämpfung des Basissystems. Dadurch soll die Wirkung des negativen Reibwertgradienten neutralisiert werden. Die dafür erforderliche Erhöhung der Dämpfung ist individuell für jede konkrete Anwendung bestimmbar.

Die Zylinderanordnung umfasst zum Beispiel ein Dichtelement eines Kolbens, zum Beispiel eines Geberkolbens oder Nehmerkolbens eines hydraulischen oder pneumatischen Rücksystems, die der Abdichtung einer hydraulischen Flüssigkeit oder eines pneumatischen Gases gegenüber der Umgebung dient. Das Dichtelement weist dazu eine Kontaktlippe auf, die auf einer korrespondierenden Dichtfläche aufliegt und relativ zur Dichtfläche eine Bewegung ausführt. Die Kontaktlippe ist dabei derart gegen die Dichtfläche gepresst, dass keine beziehungsweise nur eine vernachlässigbare Menge der hydraulischen Flüssigkeit oder des pneumatischen Gases diese Barriere durchbrechen kann. Die Kontaktlippe muss dabei nicht allein die Kraft auf die Kontaktlippe aufbringen, sondern er kann zudem so eingerichtet sein, dass er durch das Fluid unterstützt wird und die Kontaktlippe zusätzlich gegen die korrespondierende Dichtfläche gepresst wird.

Bei der hier vorgeschlagenen Zylinderanordnung ist der Tilger insbesondere unmittelbar an einer Kolbenstange oder an dem Kolben angeordnet.

Bevorzugt ist der Tilger ringförmig und umschließt eine Kolbenstange oder den Kolben und ist unmittelbar an einer Kolbenstange oder an dem Kolben angeordnet.

Gemäß einer bevorzugten Ausgestaltung umfasst der Tilger ein gebogenes Blechteil, dass an einem ersten Ende an dem Kolben oder an einer Kolbenstange befestigt ist und an einem zweiten Ende, das frei schwingen kann eine Zusatzmasse aufweist.

Insbesondere ist der Tilger einstückig ausgeführt. Das heißt insbesondere, dass alle Bauteile des Tilgers stoffschlüssig miteinander verbunden sind. Stoffschlüssige Verbindungen werden insbesondere Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen.

Bevorzugt umfasst der Tilger eine Mehrzahl von einzelnen Tilgern, die zusammen insbesondere die für den einzelnen Tilger angeführten Eigenschaften aufweisen.

Der Tilger besteht insbesondere aus einer Masse und einem Feder-Dämpfer-Element.

Insbesondere stellt der Tilger einen Oszillator dar, der in einer bestimmten Richtung schwingt. Insbesondere ist die Richtung der Schwingung des Oszillators mit der Richtung der Schwingung des Basissystems gleichgerichtet.

Der hier vorgeschlagene Tilger weist insbesondere eine Zusatzmasse auf, die an einem Federarm (z. B. das oben angeführte Blechteil) aufgehängt ist und somit ein Schwingungssystem mit einer vorbestimmbaren Eigenfrequenz (Eigenfrequenz des Tilgers) bildet. Dabei ist die Masse der Zusatzmasse und/oder die Federkraft des Federarms entsprechend einer gewünschten Eigenfrequenz einstellbar und bildet so einen Dämpfer. Die Eigenfrequenz wird dabei in vorteilhafter Weise derart eingerichtet, dass eine vorbestimmte Anregungsfrequenz, die das Basissystem und/oder die Kontaktlippe in Schwingungen versetzen und somit einen Stick-Slip-Effekt anregen könnte, gedämpft wird. Damit wird die Anregung der Kontaktlippe vermindert oder sogar eliminiert.

Gemäß einem weiteren Aspekt der Erfindung wird ein hydraulisches oder pneumatisches Rücksystem für eine Reibkupplung vorgeschlagen, aufweisend zumindest die folgenden Komponenten:
- eine Geberzylinderanordnung mit einem Geberkolben in einem Geberzylinder,
- eine Nehmerzylinderanordnung mit einem Nehmerkolben in einem Nehmerzylinder ,
wobei die Geberzylinderanordnung und die Nehmerzylinderanordnung strömungstechnisch miteinander kommunizieren, sodass eine Bewegung des Geberkolbens in eine Bewegung des Nehmerkolbens umsetzbar ist, wobei zumindest einer der Zylinderanordnungen eine erfindungsgemäße Zylinderanordnung umfasst, wobei mittels des Dichtelements der Kolben gegenüber dem zugehörigen Zylinder derart abdichtbar ist, dass ein Überströmen eines Fluids im zugehörigen Zylinder unterbindbar ist.

Das hydraulische oder pneumatische Rücksystem besteht aus einem Geberkolben, welcher in einem Geberzylinder ein Gebervolumen komprimieren kann und einem entsprechenden Nehmerkolben, welcher in einem Nehmerzylinder infolge einer Volumenerweiterung im Nehmerzylinder bewegt wird. Entgegen der Namensgebung Geberkolben und Nehmerkolben ist auch eine rückläufige Übertragung der Kräfte möglich. Zudem kann eine Übersetzung durch unterschiedliche Kolbenflächen oder sonstige Elemente stattfinden. Zumindest einer der Zylinderanordnungen ist dabei erfindungsgemäß ausgeführt, wobei der Tilger den Effekt des negativen Reibwertgradienten zumindest teilweise neutralisiert. Der Tilger erhöht insbesondere die Dämpfung des Basissystems.

Weiterhin wird eine Reibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket, wobei über das Reibpaket im angepressten Zustand ein Drehmoment übertragbar ist;
- ein Rücksystem gemäß der obigen Beschreibung zum Betätigen des Reibpakets mittels des Nehmerkolbens.

Die Reibkupplung ist dazu eingerichtet, ein Drehmoment lösbar von einer Abtriebswelle auf einen Antriebsstrang und umgekehrt zu übertragen. Dies wird in der Regel über das zumindest eine Reibpaket, wie es oben beschrieben ist, erreicht, welches eine axial verschiebbare, in der Regel mit der Abtriebswelle rotationsfeste, Anpressplatte aufweist, die gegen zumindest eine korrespondierende Reibscheibe pressbar ist und dann ein Drehmoment übertragen kann. Die Kraft wird hierbei durch ein Betätigungssystem erzeugt, welches direkt oder indirekt durch einen Benutzer betätigt wird. Von diesem Betätigungssystem geht die Kraft aus, die zu einer axialen Verpressung des zumindest einen Reibpakets führt. Besonders bevorzugt ist das Betätigungssystem dabei hydraulisch oder pneumatisch eingerichtet, wodurch besonders große Axialkräfte erzeugt werden können und ein Übersetzungsverhältnis leicht einstellbar ist. Hierbei ist der Einsatz einer Zylinderanordnung gemäß der obigen Beschreibung vorteilhaft, weil Geräusche den Fahrer beunruhigen können.

Weiterhin wird auch ein Kraftfahrzeug vorgeschlagen, welches eine Antriebseinheit mit einer Abtriebswelle, einen Antriebsstrang und eine Reibkupplung gemäß der obigen Beschreibung zum lösbaren Verbinden der Abtriebswelle mit dem Antriebsstrang aufweist.

Die meisten Kraftfahrzeuge weisen heutzutage einen Frontantrieb auf und ordnen daher bevorzugt die Antriebseinheit, beispielsweise eine Verbrennungskraftmaschine oder einen Elektromotor, vor der Fahrerkabine und quer zur Hauptfahrrichtung an. Der Bauraum ist gerade bei einer solchen Anordnung besonders gering und es ist daher besonders vorteilhaft, eine Reibkupplung kleiner Baugröße zu verwenden.

Verschärft wird die Bauraumsituation bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Die hier Zylinderanordnung erlaubt einen geräuschfreien Betrieb eines hydraulischen Ausrückers. Dies ist für den Fahrer besonders angenehm und für Kleinwagen setzt sich die hydraulische Betätigung aufgrund zunehmender Bauteilmengen durch.

Personenkraftwagen werden einer Fahrzeugklasse nach beispielsweise Größe, Preis, Gewicht, Leistung eingeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beispielsweise der Klasse City Car. Beispiele der Kleinstwagenklasse sind ein Volkswagen Fox oder ein Renault Twingo. Beispiele der Kleinwagenklasse sind ein Alfa Romeo Mito, Volkswagen Polo, Ford Fiesta oder Renault Clio.

Die in den Patentansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: eine Zylinderanordnung mit Basissystem und Tilger;
- Fig. 2:: eine schematische Darstellung der Zylinderanordnung gemäß Fig. 1;
- Fig. 3:: eine erste Ausführungsvariante eines Tilgers;
- Fig. 4:: eine zweite Ausführungsvariante eines Tilgers;
- Fig. 5:: ein Rücksystem mit Reibkupplung;
- Fig. 6:: ein Kraftfahrzeug.

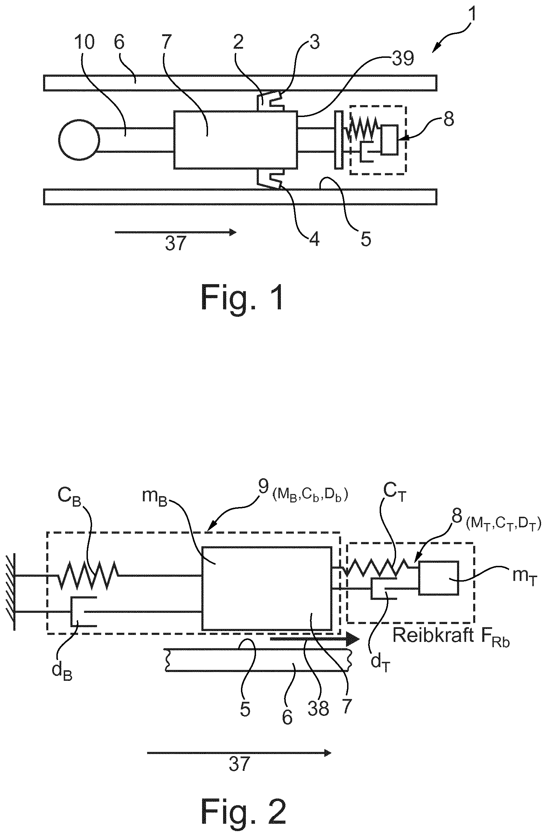

Fig. 1 zeigt eine Zylinderanordnung 1 mit Basissystem 9 und Tilger 8. Die Zylinderanordnung umfasst einen Zylinder 6 und einen darin angeordneten Kolben 7, wobei der Kolben 7 ein Dichtelement 2 zum Dichten der relativ zueinander verschiebbaren Bauteile Kolben 7 und Zylinder 6 aufweist und zumindest eine Kontaktlippe 3 mit einem Umfang 4 umfasst, die dazu eingerichtet ist, im Einbau verschiebbar an einer korrespondierenden Dichtfläche 5 des Zylinders 6 umfänglich anzuliegen und somit eine Dichtwirkung einzustellen. Die Zylinderanordnung 1 ohne Tilger 8 stellt ein Basissystem 9 dar.

Fig. 2 zeigt eine schematische Darstellung der Zylinderanordnung gemäß Fig. 1 mit Basissystem 9 und Tilger 8. Das Basissystem 9 wird durch die folgenden Parameter charakterisiert:
- m_{B} (Masse des Basissystems),
- c_{B} (Steifigkeit des Basissystems),
- d_{B} (Dämpfung des Basissystems), und
- ω_{B} (Eigenfrequenz des Basissystems), wobei ω_{B} = √(c_{B}/m_{B}).
Der Tilger 8 ist an dem Basissystem 9 befestigt und weist folgende Parameter auf:
- m_{T} (Masse des Tilgers),
- c_{T} (Steifigkeit des Tilgers),
- d_{T} (Dämpfung des Tilgers), und
- ω_{T} (Eigenfrequenz des Tilgers), wobei ω_{T} = √(c_{T}/m_{T}).
Basissystem 9 und Tilger 8 schwingen in derselben Richtung 37. Der Kolben 7 bewegt sich gegenüber der Dichtfläche 5 am Zylinder 6 mit einer (sich verändernden) Geschwindigkeit 38.

Der Tilger 8 erhöht die Dämpfung des Basissystems 9 und dämpft eine Anregungsfrequenz des Basissystems 9.

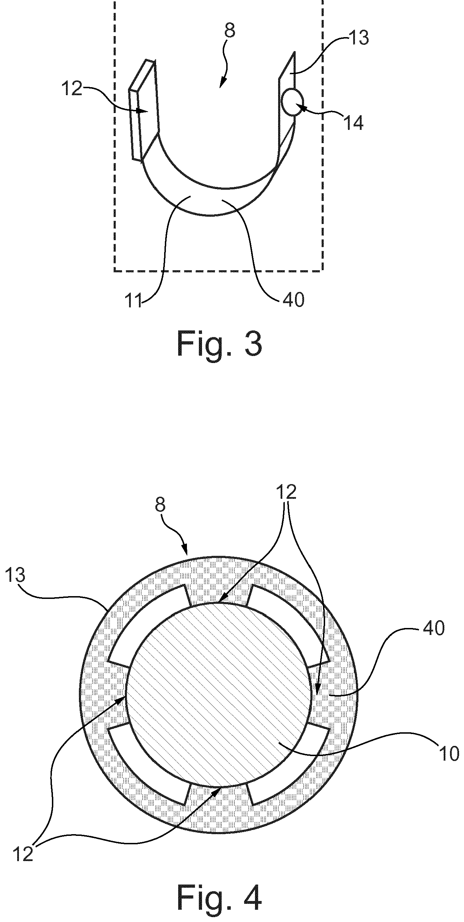

Fig. 3 zeigt eine erste Ausführungsvariante eines Tilgers 8. Hier besteht der Tilger 8 aus einem Blechteil 11 (entspricht einem Federarm 40) mit einem ersten Ende 12 und einem zweiten Ende 13. Der Tilger 8 ist über das erste Ende 12 z. B. an einer Stirnfläche 37 des Kolbens 7 befestigt. An dem zweiten Ende 13 ist eine Zusatzmasse 14 angeordnet. Blechteil 11 und Zusatzmasse 14 bilden ein Feder-Dämpfer-System und damit einen Tilger 8.

Fig. 4 zeigt eine zweite Ausführungsvariante eines ringförmigen Tilgers 8. Der Tilger 8 ist über eine Mehrzahl von ersten Enden 12 unmittelbar an dem Kolben 7 oder (wie hier gezeigt) an der Kolbenstange 10 angeordnet. Der Tilger 8 erstreckt sich vollumfänglich um die Kolbenstange 10/ den Kolben 7. Die äußere Umfangsfläche des ringförmigen Tilgers 8 bildet das zweite Ende 13. Erste Enden 12 und zweites Ende 13 bilden ein Feder-Dämpfer-System und damit einen Tilger 8.

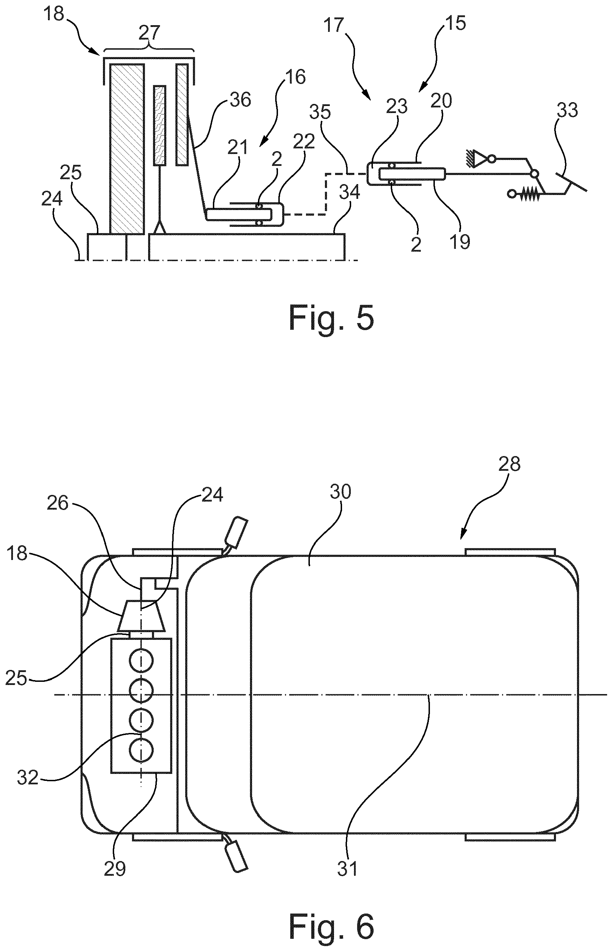

Fig. 5 zeigt ein hydraulisches oder pneumatisches Rücksystem 17, wobei in einer Geberzylinderanordnung 15 ein Geberkolben 19 in einem Geberzylinder 20 über ein Kupplungspedal 33 betätigbar ist. Der Geberkolben 19 ist gegenüber dem Geberzylinder 20 mittels eines Dichtelements 2, wie es zum Beispiel in Fig. 1 gezeigt ist, abgedichtet und somit ist ein Fluid 23 in dem Geberzylinder 20 durch den Geberkolben 19 beeinflussbar. Über die Verbindungsleitung 35 wird das Fluid 23 bei einem Betätigen des Kupplungspedals 33 in den Nehmerzylinder 22 einer Nehmerzylinderanordnung 16 gedrückt und durch ein weiteres Dichtelement 2, wie es zum Beispiel in Fig. 1 gezeigt ist, wird die Wirkung des strömenden Fluids 23 auf den Nehmerkolben 21 übertragen. Dieser wiederum betätigt eine Tellerfeder 36, die somit das Reibpaket 27 einer Reibkupplung 18 voneinander ausrückt, so dass ein an einer Abtriebswelle 25 anliegendes Drehmoment nicht weiter auf die Getriebewelle 34 übertragen wird. Die Reibkupplung 18 weist eine Rotationsachse 24 auf, um die die Elemente der Reibkupplung 18 rotieren.

In Fig. 6 ist ein Kraftfahrzeug 28 mit einer Antriebseinheit 29 gezeigt, welche mit ihrer Motorachse 32 quer zur Längsachse 31 vor der Fahrerkabine 30 angeordnet ist. Die Antriebseinheit 29 ist hier als Verbrennungskraftmaschine dargestellt, welche über eine Abtriebswelle 25 mittels einer Reibkupplung 18, die eine Rotationsachse 24 in Flucht mit der Motorachse 32 aufweist, mit einem hier rein schematisch dargestellten Antriebsstrang 26 verbunden ist.

Mit der hier vorgeschlagenen Zylinderanordnung 1 mit zumindest einem Tilger 8 wird der Stick-Slip-Effekt verringert und die Anregung der Kontaktlippe 3 gedämpft, so dass Geräusche zumindest weitgehend eliminiert werden.

### Bezugszeichenliste

- 1: Zylinderanordnung
- 2: Dichtelement
- 3: Kontaktlippe
- 4: Umfang
- 5: Dichtfläche
- 6: Zylinder
- 7: Kolben
- 8: Tilger
- 9: Basissystem
- 10: Kolbenstange
- 11: Blechteil
- 12: erstes Ende
- 13: zweites Ende
- 14: Zusatzmasse
- 15: Geberzylinderanordnung
- 16: Nehmerzylinderanordnung
- 17: hydraulisches oder pneumatisches Rücksystem
- 18: Reibkupplung
- 19: Geberkolben
- 20: Geberzylinder
- 21: Nehmerkolben
- 22: Nehmerzylinder
- 23: Fluid
- 24: Rotationsachse
- 25: Abtriebswelle
- 26: Antriebsstrang
- 27: Reibpaket
- 28: Kraftfahrzeug
- 29: Antriebseinheit
- 30: Fahrerkabine
- 31: Längsachse
- 32: Motorachse
- 33: Kupplungspedal
- 34: Getriebewelle
- 35: Verbindungsleitung
- 36: Tellerfeder
- 37: Richtung
- 38: Geschwindigkeit
- 39: Stirnfläche
- 40: Federarm

- m_{B}: Masse des Basissystems
- c_{B}: Steifigkeit des Basissystems
- d_{B}: Dämpfung des Basissystems
- ω_{B}: Eigenfrequenz des Basissystems
- m_{T}: Masse des Tilgers
- c_{T}: Steifigkeit des Tilgers
- d_{T}: Dämpfung des Tilgers
- ω_{T}: Eigenfrequenz des Tilgers

## Patentansprüche

1. Zylinderanordnung (1) mit einem Tilger (8), zumindest umfassend einen Zylinder (6) und einen darin angeordneten Kolben (7), wobei der Kolben (7) mindestens ein Dichtelement (2) zum Dichten der relativ zueinander verschiebbaren Bauteile Kolben (7) und Zylinder (6) aufweist und zumindest eine Kontaktlippe (3) mit einem Umfang (4) umfasst, die dazu eingerichtet ist, im Einbau verschiebbar an einer korrespondierenden Dichtfläche (5) des Zylinders (6) umfänglich anzuliegen und somit eine Dichtwirkung einzustellen; wobei die Zylinderanordnung (1) ohne Tilger (8) ein Basissystem (9) darstellt und durch die folgenden Parameter charakterisiert wird:
• m_{B} (Masse des Basissystems),
• c_{B} (Steifigkeit des Basissystems),
• d_{B} (Dämpfung des Basissystems), und
• ω_{B} (Eigenfrequenz des Basissystems), wobei ω_{B} = √(c_{B}/m_{B})
**dadurch gekennzeichnet, dass** der Tilger (8) an dem Basissystem (9) befestigt ist und folgende Parameter aufweist:
• m_{T} (Masse des Tilgers),
• c_{T} (Steifigkeit des Tilgers),
• d_{T} (Dämpfung des Tilgers), und
• ω_{T} (Eigenfrequenz des Tilgers), wobei ω_{T} = √(c_{T}/m_{T}); und
der Tilger (8) folgende Bedingungen erfüllt:
• 0,6 * ω_{B} ≤ ω_{T} ≤ 0,9 * ω_{B} und
• 0,3 * 2 * √(c_{T} * m_{T}) ≤ d_{T} ≤ 0,9 * 2 * √(c_{T} * m_{T}),
wobei der Tilger (8) die Dämpfung des Basissystems (9) erhöht und eine Anregungsfrequenz des Basissystems (9) dämpft.

2. Zylinderanordnung (1) nach Anspruch 1, wobei der Tilger (8) unmittelbar an einer Kolbenstange (10) oder an dem Kolben (7) angeordnet ist.

3. Zylinderanordnung (1) nach einem der vorhergehenden Ansprüche, wobei der Tilger (8) ringförmig ist und eine Kolbenstange (10) oder den Kolben (7) umschließt und unmittelbar an einer Kolbenstange (10) oder an dem Kolben (7) angeordnet ist.

4. Zylinderanordnung (1) nach einem der Ansprüche 1 und 2, wobei der Tilger (8) ein gebogenes Blechteil (11) umfasst, dass an einem ersten Ende (12) an dem Kolben (7) oder an einer Kolbenstange (10) befestigt ist und an einem zweiten Ende (13), das frei schwingen kann eine Zusatzmasse (14) aufweist.

5. Zylinderanordnung (1) nach einem der vorhergehenden Ansprüche, wobei der Tilger (8) einstückig ausgeführt ist.

6. Zylinderanordnung (1) nach einem der vorhergehenden Ansprüche, wobei der Tilger (8) eine Mehrzahl von einzelnen Tilgern (8) umfasst.

7. Hydraulisches oder pneumatisches Rücksystem (17) für eine Reibkupplung (18), aufweisend zumindest die folgenden Komponenten:
• eine Geberzylinderanordnung (15) mit einem Geberkolben (19) in einem Geberzylinder (20),
• eine Nehmerzylinderanordnung (16) mit einem Nehmerkolben (21) in einem Nehmerzylinder (22),
wobei die Geberzylinderanordnung (15) und die Nehmerzylinderanordnung (16) strömungstechnisch miteinander kommunizieren, sodass eine Bewegung des Geberkolbens (19) in eine Bewegung des Nehmerkolbens (21) umsetzbar ist, wobei zumindest einer der Zylinderanordnungen (15, 16) zumindest eine Zylinderanordnung (1) nach einem der vorhergehenden Ansprüche umfasst, wobei mittels des Dichtelements (2) der Kolben (7, 19, 21) gegenüber dem zugehörigen Zylinder (6, 20, 22) derart abdichtbar ist, dass ein Überströmen eines Fluids (23) im zugehörigen Zylinder (6, 20,22) unterbindbar ist.

## Claims

1. Cylinder arrangement (1) having an absorber (8), at least comprising a cylinder (6) and a piston (7) arranged therein, wherein the piston (7) has at least one sealing element (2) for sealing the components, piston (7) and cylinder (6), which are displaceable relative to each other, and comprises at least one contact lip (3) with a circumference (4) which is designed to lie in the installation circumferentially in a displaceable manner against a corresponding sealing surface (5) of the cylinder (6) and therefore to adjust a sealing action; wherein the cylinder arrangement (1) without the absorber (8) constitutes a basic system (9) and is **characterized by** the following parameters:
• m_{B} (mass of the basic system),
• c_{B} (rigidity of the basic system),
• d_{B} (damping of the basic system), and
• ω_{B} (natural frequency of the basic system), wherein ω_{B} = √(c_{B}/m_{B})
**characterized in that** the absorber (8) is fastened to the basic system (9) and has the following parameters:
• m_{T} (mass of the absorber),
• c_{T} (rigidity of the absorber),
• d_{T} (damping of the absorber), and
• ω_{T} (natural frequency of the absorber), wherein ω_{T} = √(C_{T}/m_{T}) ; and
the absorber (8) meets the following conditions:
• 0.6 * ω_{B} ≤ ω_{T} ≤ 0.9 * ω_{B} and
• 0.3 * 2 * √(c_{T} * m_{T}) ≤ d_{T} ≤ 0.9 * 2 * √(c_{T} * m_{T}),
wherein the absorber (8) increases the damping of the basic system (9) and damps an excitation frequency of the basic system (9).

2. Cylinder arrangement (1) according to Claim 1, wherein the absorber (8) is arranged directly on a piston rod (10) or on the piston (7).

3. Cylinder arrangement (1) according to either of the preceding claims, wherein the absorber (8) is annular and surrounds a piston rod (10) or the piston (7) and is arranged directly on a piston rod (10) or on the piston (7).

4. Cylinder arrangement (1) according to either of Claims 1 and 2, wherein the absorber (8) comprises a curved sheet-metal part (11) which is fastened at a first end (12) to the piston (7) or to a piston rod (10) and has an additional mass (14) at a second end (13) which can freely vibrate.

5. Cylinder arrangement (1) according to one of the preceding claims, wherein the absorber (8) is designed as a single piece.

6. Cylinder arrangement (1) according to one of the preceding claims, wherein the absorber (8) comprises a plurality of individual absorbers (8).

7. Hydraulic or pneumatic engaging system (17) for a friction clutch (18), having at least the following components:
• a master cylinder arrangement (15) with a master piston (19) in a master cylinder (20),
• a slave cylinder arrangement (16) with a slave piston (21) in a slave cylinder (22),
wherein the master cylinder arrangement (15) and the slave cylinder arrangement (16) communicate with each other in terms of flow, and therefore a movement of the master piston (19) can be converted into a movement of the slave piston (21), wherein at least one of the cylinder arrangements (15, 16) comprises at least one cylinder arrangement (1) according to one of the preceding claims, wherein the piston (7, 19, 21) can be sealed in relation to the associated cylinder (6, 20, 22) by means of the sealing element (2) in such a manner that an overflow of a fluid (23) in the associated cylinder (6, 20, 22) can be prevented.

## Revendications

1. Agencement de cylindre (1) avec un amortisseur (8), comprenant au moins un cylindre (6) et un piston (7) disposé à l'intérieur, le piston (7) comportant au moins un élément d'étanchéité (2) pour étanchéifier les composants piston (7) et cylindre (6) pouvant être coulissés l'un par rapport à l'autre et comprenant au moins une lèvre de contact (3) avec une périphérie (4) conçue pour buter sur toute la périphérie, une fois montée, de façon coulissante contre une surface d'étanchéité (5) correspondante du cylindre (6) et ainsi régler un effet d'étanchéité ; l'agencement de cylindre (1) sans amortisseur (8) représentant un système de base (9) et étant **caractérisé par** les paramètres suivants :
• m_{B} (masse du système de base) ;
• c_{B} (rigidité du système de base) ;
• d_{B} (amortissement du système de base) : et
• ω_{B} (fréquence propre du système de base), où ω_{B} = √(c_{B} / m_{B})
**caractérisé en ce que** l'amortisseur (8) est fixé au système de base (9) et comporte les paramètres suivants :
• m_{T} (masse de l'amortisseur) ;
• c_{T} (rigidité de l'amortisseur) ;
• d_{T} (amortissement de l'amortisseur) ; et
• ω_{T} (fréquence propre de l'amortisseur), où ω_{T} = √(c_{T} / m_{T}) ; et
où l'amortisseur (8) remplit les conditions suivantes :
• 0 , 6 * ω_{B} ≤ ω_{T} ≤ 0,9 * ω_{B} et
• 0, 3 * 2 * √(c_{T} * m_{T}) ≤ d_{T} ≤ 0, 9 * 2 * √(c_{T} * m_{T}) ;
l'amortisseur (8) accroissant l'amortissement du système de base (9) et amortissant une fréquence d'excitation du système de base (9).

2. Agencement de cylindre (1) selon la revendication 1, l'amortisseur (8) étant disposé directement contre une tige de piston (10) ou contre le piston (7).

3. Agencement de cylindre (1) selon l'une quelconque des revendications précédentes, l'amortisseur (8) étant en forme de bague et enserrant une tige de piston (10) ou le piston (7) et étant directement disposé contre une tige de piston (10) ou contre le piston (7).

4. Agencement de cylindre (1) selon l'une quelconque des revendications 1 et 2, l'amortisseur (8) comprenant une partie de tôle (11) courbée fixée à une première extrémité (12) au niveau du piston (7) ou au niveau d'une tige de piston (10) et pouvant comporter une masse supplémentaire (14) au niveau d'une deuxième extrémité (13) oscillant librement.

5. Agencement de cylindre (1) selon l'une quelconque des revendications précédentes, l'amortisseur (8) étant réalisé d'un seul tenant.

6. Agencement de cylindre (1) selon l'une quelconque des revendications précédentes, l'amortisseur (8) comprenant une pluralité d'amortisseurs (8) individuels.

7. Système de retour hydraulique ou pneumatique (17) pour un embrayage à frottement (18), comportant au moins les composants suivants :
• un agencement de maître-cylindre (15) avec un maître-piston (19) dans un maître-cylindre (20) ;
• un agencement de cylindre récepteur (16) avec un piston récepteur (21) dans un cylindre récepteur (22) ;
l'agencement de maître-cylindre (15) et l'agencement de cylindre récepteur (16) communiquant entre eux par le biais de la technique de l'écoulement, de sorte qu'un mouvement du maître-piston (19) puisse être converti en un mouvement du piston récepteur (21), au moins un des agencements de cylindre (15,16) comprenant au moins un agencement de cylindre (1) selon l'une quelconque des revendications précédentes, le piston (7,19,21) étant étanchéifié de telle sorte par rapport au cylindre (6, 20, 22) associé à l'aide de l'élément d'étanchéité (2) qu'un débordement d'un fluide (23) est empêché dans le cylindre (6, 20, 22) associé.
